Europäisches Patentamt

European Patent Office

Office européen des brevets

(19)

(11) Veröffentlichungsnummer: **0 247 307 B1**

# EUROPÄISCHE PATENTSCHRIFT

(12)

(45) Veröffentlichungstag der Patentschrift: **22.05.91**

(51) Int. Cl.⁵: **D21C 5/02**

(21) Anmeldenummer: **87104044.0**

(22) Anmeldetag: **19.03.87**

(54) **Verfahren zum Entfärben von in der Masse gefärbten Papieren und Selbstdurchschreibepapieren.**

(30) Priorität: **17.05.86 DE 3616816**

(43) Veröffentlichungstag der Anmeldung:
**02.12.87 Patentblatt 87/49**

(45) Bekanntmachung des Hinweises auf die
Patenterteilung:
**22.05.91 Patentblatt 91/21**

(84) Benannte Vertragsstaaten:
**AT BE DE FR GB IT NL SE**

(56) Entgegenhaltungen:
**EP-A- 0 040 873**
**DE-B- 2 816 148**
**DE-C- 3 309 956**

(73) Patentinhaber: **Degussa Aktiengesellschaft**
**Weissfrauenstrasse 9**
**W-6000 Frankfurt am Main 1(DE)**

(72) Erfinder: **Süss, Hans-Ulrich, Dr.**
**Schulstrasse 24**
**W-6467 Hasselroth-Gondsroth(DE)**
Erfinder: **Eul, Wilfried, Dr.**
**Templerstrasse 3**
**W-6500 Mainz(DE)**
Erfinder: **Dr. Helmling**
**425 Rutgers Court**
**Wykoff New Jersey 07481(US)**
Erfinder: **Meier, Jürgen**
**9 Arena Court**
**Elmwood Park New Jersey 07407(US)**

**Beschreibung**

Die Erfindung betrifft ein Verfahren zum Entfärben von in der Masse gefärbten Papieren und Selbstdurchschreibepapieren. Diese enthalten in vielen Fällen auch in der Masse gefärbte Papierlagen.

Während für das Recycling von gewöhnlichem Altpapier wie z.B. Zeitungen und Zeitschriften inzwischen eine Vielzahl von Verfahren bekannt ist, besteht bei der Wiederaufbereitung von Selbstdurchschreibepapieren noch eine Reihe von ungelösten Problemen.

Die üblicherweise beim sogenannten De-inken angewandten Flotationsverfahren sind zwar geeignet, Druckfarbenpartikel von der Papierfaser abzulösen und vom Faserstoff abzutrennen, erweisen sich jedoch als wenig wirksam bei der Entfärbung von in der Masse gefärbten Papieren.

Zusätzliche Schwierigkeiten bereiten die mikroverkapselten Farbstoffe der Durchschreibepapiere.

Bei der Herstellung von bunten Papieren führt es z.B. zu Problemen, beim Wechseln der Farbe den Ausschuß in die Produktion zurückzuführen.

Auch kann in Abhängigkeit vom Anteil an in der Masse gefärbtem Papier beim Einsatz von Altpapier eine Verschiebung des Altpapierfarbtones während der Produktion nicht ausgeschlossen werden. Wird gemischtes Altpapier zur Herstellung von Recyclingpapier verwendet, so kann durch einen hohen Anteil an massegefärbtem Rohstoff die Gleichmäßigkeit der Produktion gefährdet werden.

Es ist bekannt, Natriumhypochlorit zum Zerstören der Farbstoffe zu verwenden und anschließend mit Natriumdithionit zu bleichen ( Tappi,July 1979, Vol. 62, S. 27 - 30).

Hypochlorit ist jedoch nur geeignet, wenn holzfreie Papierqualitäten zur Verfügung stehen. Diese begrenzte Anwendbarkeit von Hypochlorit ist auf die Tatsache zurückzuführen, daß das Hypochlorit mit dem Lignin holzhaltiger Stoffe reagiert. Der steigende Anteil holzhaltiger Papierrohstoffe macht daher die Anwendung von Hypochlorit auch bei der Wiederverwendung von in der Masse gefärbtem Ausschuß praktisch unmöglich. Die Verwendung von Hypochlorit als Bleichmittel kann zudem zur Bildung umweltbelastender chlororganischer Verbindungen und zu Chloremissionen führen.

In der EP-A 0120132 wird ein Verfahren Zum Bleichen von Papierrohstoffen beschrieben, bei dem man das Papier in Gegenwart von Natriumhydroxid und Wasserstoffperoxid ohne Wasserglaszusatz aufschlägt, ohne eine Flotation folgen zu lassen.

In der Praxis hat sich dieses Verfahren jedoch wegen der unzureichenden Ergebisse nicht durchsetzen können. Zur Bleiche von Holzpulpen mit niedrigen Zellulosegehalt wird gemäß DE-OS 1 546 252 die Verwendung von Formamidinsulfinsäure, bevorzugt in Gegenwart von Natriumbisulfit, empfohlen.

Ein ähnliches Problem ist Gegenstand der DE-PS 3 309 956, in der die Bleiche von Papierrohstoffen wie z.B. Holzschliff aber auch Altpapier beschrieben wird. Dabei handelt es sich um Mischungen aus Zeitungen und Illustrierten, die in einem bekannten Flotationsverfahren statt mit Wasserstoffperoxid mit Formamidinsulfinsäure versetzt werden, ohne daß der Weißgehalt bemerkenswert anstiege.

Aufgabe der Erfindung ist ein Verfahren zum Entfärben von in der Masse gefärbten Papieren und Selbstdurchschreibepapieren, die mikroverkapselte Farbstoffe und häufig auch in der Masse gefärbte Papierbögen enthalten.

Gegenstand der Erfindung ist ein Verfahren zum Entfärben von in der Masse gefärbten Papieren und Selbstdurchschreibepapieren in einem alkalischen wässrigen Medium, das dadurch gekennzeichnet ist, daß man bei einer Stoffdichte von 2 bis 20 und einer Temperatur von 20 bis 80° C, bevorzugt von 40 bis 60° C, mit 0,05 bis2,5 Gew.-%, bevorzugt 0,1 bis 1,0 % Gew.-%, Formamidinsulfinsäure (FAS), bezogen auf die Menge des Papiers (atro), entfärbt.

In einer besonders geeigneten Ausführungsform wird pH-Wert der Pulpe so eingestellt, daß er zu Beginn der Reaktion zwischen 7,5 und 12,0 bevorzugt 8,5 und 10,0 und nach der Beendigung zwischen 6,0 und 8,0, bevorzugt 6,5 und 7,5 liegt.

Zu diesem Zweck erfolgt vorher das Aufschlagen des Papiers (Stoffauflösung) bevorzugt in einem Pulper bei einer Temperatur zwischen 20 und 80° C, bevorzugt 30 und 70° C in einem wässrigen Medium, das alkalisch bevorzugt mit Natriumhydroxid eingestellt ist. Anschließend erfolgt dann die Entfärbung mit FAS.

In einer vorteilhaften Ausführungsform des Verfahren setzt man das FAS nicht anschließend sondern gleich zu Beginn oder während dieses Verfahrensschrittes ein.

Da das Aufschlagen selbst nur ca. 10 bis 30 min. erfordert, läßt man die Pulpe anschließend gegebenenfalls unter weiterem Umwälzen noch bei 20 bis 80° C, bevorzugt 40 bis 60° C, ausreagieren.

Als Rohstoffe verwendbar sind in der Masse gefärbte Papiere, die sowohl bedruckt als auch unbedruckt, holzfrei oder holzhaltig sein können.

Eingesetzt werden ebenso Selbstdurchschreibepapiere, die mikroverkapselte Farbstoffe enthalten.

Insbesondere bei Verwendung von unbedrucktem oder nur schwach bedrucktem,in der Masse gefärb-

EP 0 247 307 B1

tem Recyclingpapier oder Selbstdurchschreibepapieren, oder Ausschuß aus der Produktion dieser Papiersorten erübrigen sich im Normalfall weitere Verfahrenschritte und weitere zusätzliche Chemikalien wie Seifen etc..

Bei bedrucktem Papier - holzfrei oder holzhaltig - und/oder höheren Ansprüchen an den Weißgrad erweist es sich als zweckmäßig, den nach dem Stand der Technik bekannten Flotations-Deinking-oder den Wasch-Deinking-Prozeß oder eine Folge Flotation/Wäsche bzw. Wäsche/Flotation oder eine Kombination von Wasch- und Flotations-Verfahren unter Verwendung von Wasserstoffperoxid, Natronlauge, Wasserglas und weiteren bekannten Dispergier - und Flotationshilfsmitteln der Entfärbung mit Formamidinsulfinsäure vorausgehen zu lassen. Die DE-AS 2 303 827, DE-AS 2 813 448; PTS - Symposium "Altpapier - Aufbereitung", 1981 München, W. Auhorn und J. Melzer, S 57 - 64 betreffen Deinkingsverfahren nach dem Stand der Technik.

Eine Standardrezeptur für das Flotationsdeinking lautet:

```
    1 % Wasserstoffperoxid      (Gew.-% bezogen
                                 auf atro Papier-
                                 stoff)

    1 % NaOH
  0,3 % Na₅ DTPA      (Pentanatriumsalz der
                       Diethylentriaminpenta-
    3 % Wasserglas     essigsäure oder ein anderer
  0,6 % Natrium-       bekannter Komplexbildner)
        olinat
```

Die oben beschriebene Problematik der Entfärbung von in der Masse eingefärbten Papiersorten läßt sich durch eine Behandlung des Papierstoffes mit Formamidinsulfinsäure nach dem Verfahren gemäß der Erfindung einfach lösen. Ebenso lassen sich Recyclingpapiere, die Farbstoffe aus Farbkapseln von Selbstdurchschreibepapieren enthalten, durch die erfindungsgemäße Behandlung mit Formamidinsulfinsäure entfärben, während die Behandlung mit Dithionit im sauren Bereich häufig sogar zu einem Weißgradverlust führt.

Bei der Beurteilung gefärbter Papiere ist aber nicht nur der Weißgrad ($R_{457}$) maßgeblich,sondern insbesondere auch die Farbmessung, die daher bei den folgenden Versuchen ebenfalls durchgeführt wurde (nach DIN 5033). Die Mengenangaben für FAS und Dithionit beziehen sich auf atro Papierstoff.

Beispiel 1: (Vergleich ohne Formamidinsulfinsäure)

Altpapier aus 80 % in der Masse eingefärbten Durchschreibesätzen liefert beim Aufschlagen ohne Chemikalien einen Weißgehalt von 42,9 % Remission ($R_{457}$). Der Farbort liegt bei x = 0,356 und y = 0,372. Durch eine Behandlung mit 0,5 % $H_2O_2$, 1 % Natronlauge, 2 % Wasserglas und 0,5 % Seife sowie 0,1 % DTPA bei 12 % Stoffdichte und 40° C wird nach der Flotation eine Weiße von 53,9 % Remission ($R_{457}$) und ein Farbort von x = 0,333 und y = 0,354 gemessen.

Beispiel 2:

Altpapier aus 80 % in der Masse eingefärbten Durchschreibesätzen werden einem klassischen Flotationsdeinking-Prozeß unterworfen und anschließend reduktiv gebleicht.

Hierzu imprägniert man das Altpapier 15 min bei 15 % Stoffdichte und 40° C, läßt 60 Min. ausreagieren, zerfasert 10 Min. bei 3 % Stoffdichte im Frank-Standard-Aufschlaggerät und flotiert 10 Min. bei 1 % Stoffdichte in einer Laborflotationszelle.

Der flotationsdeinkte Stoff wird dann 1 Std. bei 70° C und 4,5 % Stoffdichte mit FAS bei einem AnfangspH-Wert von ca.9,0 und einem End-pH-Wert von ca. 7,2 bzw. Dithionit bei ph 5,5 - 6 reduktiv gebleicht. Die pH-Werte wurden zuvor im Hinblick auf erzielbare Entfärbungen optimiert.

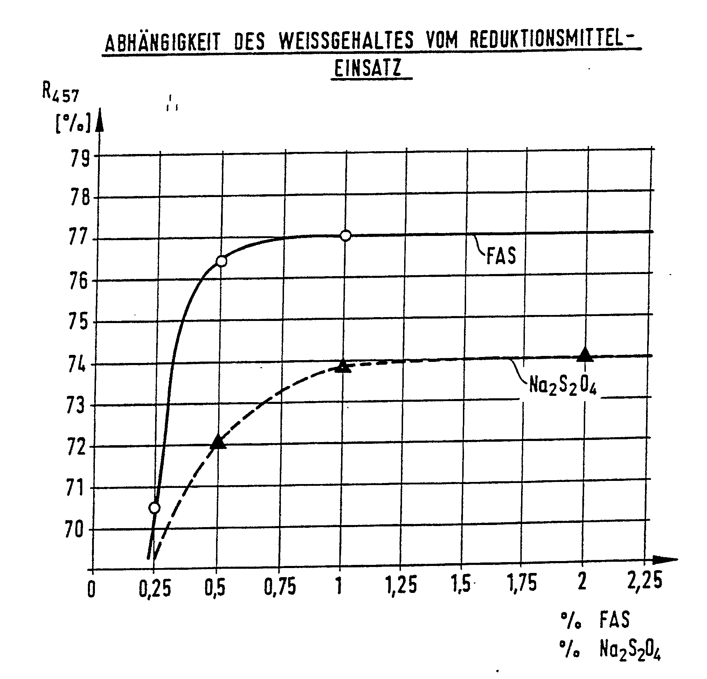

Das flotationsdeinkte Altpapier besitzt einen Weißgehalt von 42,9 Remission ($R_{457}$) Der Farbort liegt bei x = 0,356 und y = 0,372. In Abhängigkeit von der Einsatzmenge des Reduktionsmittels ist eine mehr oder

3

weniger vollständige Entfärbung des flotationsdeinkten Stoffes zu beobachten (s. Abb. 1).

Der Farbort verschiebt sich beim Einsatz von 1 % FAS nach x = 0.322 und y = 0.333, beim Einsatz von 1 % Dithionit nach x = 0.327 und y = 0.337.

Der Weißgehalt steigt in Abhängigkeit von der Einsatzmenge des Reduktionsmittels bei Dithionit bis auf 74 % bei FAS auf 77 % Remission ($R_{457}$). Insbesondere im Bereich niedriger Konzentrationen können die mit FAS erhaltenen Weißgehalte nur mit der 2 - 3-fachen Dithionitmenge erzielt werden.

Beispiel 3

Stark holzhaltiges (mehr als 40 %), in der Masse gefärbtes Altpapier wird in einer 120-tato-Anlage flotationsdeinkt und im Labor 60 Min. bei 15 % Stoffdichte nachgebleicht. Zu diesem Zweck werden jeweils 0,5 Gew.-% FAS bzw. 1,5 Gew.-% Dithionit eingesetzt. Die Ergebnisse sind in der folgenden Tabelle 1 zusammengefaßt. Sie demonstrieren die große Entfärbungskraft von FAS auch bei einer Temperatur von 37° C.

## Tabelle 1

| Flotations-Deinkt $R_{457}$ | Entfärbung mit 0,5 % FAS (pH(Anfang) = 8.3 (ph(Ende ) = 7.1 Temp.(°C) | $R_{457}$ | Entfärbung mit 1,5 % $Na_2S_2O_4$ (pH = 5,5) Temp.(°C) | |
|---|---|---|---|---|
| 61,3 | 50 | 66,9 | 50 | 66,0 |
| 61,9 | 50 | 65,8 | 50 | 64,9 |
| 68,6 | 37 | 74,6 | 50 | 71,3 |
| 66,3 | 37 | 72,0 | 50 | 69,7 |

Beispiel 4

Altpapier wird nach dem Stand der Technik flotationsdeinkt und das in Abhängigkeit von der Herkunft teilweise gefärbte Material anschließend in einem abwärts betriebenen Bleichturm bei ca. 12 - 14 % Stoffdichte mit FAS reduziert. Der Durchsatz beträgt 4,5 t/h. Die wässrige FAS-Lösung wird in eine zum Turm führende Transportschnecke dosiert. Stoffproben werden vor dem Bleichturm (2 - 3 Minuten Reaktionszeit) und nach dem Bleichturm (90 Minuten Reaktionszeit) entnommen. Die Ergebnisse sind in Tabelle 2 zusammengefaßt. Man erkennt, daß schon nach 2 - 3 Minuten Reaktionszeit eine weitgehende Entfärbung des Stoffes stattgefunden hat.

4

Tabelle 2:

Flotationsdeinkt — Entfärbung mit Formamidinsulfinsäure (FAS)

| | Flotationsdeinkt | | | T °C | pHA* / pHE | % FAS | Reaktionsz. 2-3 Min | | | Reaktionszeit 90 Min | | |
|---|---|---|---|---|---|---|---|---|---|---|---|---|
| | R457 | x | y | | | | R457 | x | y | R457 | x | y |
| 1. | 64.8 | 0.3180 | 0.3270 | 40 | 8.5 / 7.0 | 0.35 | 66.2 | 0.3164 | 0.3243 | 67.0 | 0.3174 | 0.3249 |
| 2. | 61.1 | 0.3151 | 0.3241 | 45 | 7.5 / 6.8 | 0.35 | 64.2 | 0.3187 | 0.3263 | 66.3 | 0.3153 | 0.3228 |
| 3. | 65.2 (gelb) | 0.3304 | 0.3408 | 45 | 8.2 / 7.0 | 0.40 | 68.0 | 0.3171 | 0.3232 | 70.0 | 0.3161 | 0.3225 |
| 4. | 52.3 (rosa) | 0.3280 | 0.3353 | 50 | 8.2 / 6.9 | 0.40 | 59.9 | 0.3214 | 0.3277 | 63.4 | 0.3180 | 0.3246 |
| 5. | 59.9 (rosa) | 0.3245 | 0.3332 | 52 | 7.5 / 6.8 | 0.44 | 62.1 | 0.3203 | 0.3279 | 66.5 | 0.3167 | 0.3231 |
| 6. | 60.0 rosa-violett | 0.3219 | 0.3319 | 52 | 8.0 / 7.0 | 0.44 | 64.3 | 0.3189 | 0.3264 | 68.2 | 0.3175 | 0.3241 |

* pHA = pH nach 2 - 3 min Reaktionszeit
  pHE = pH nach 90 min Reaktionszeit

Diese großtechnisch durchgeführten Versuche zeigen noch einmal deutlich, daß in der Masse gefärbte Papiere (3-6) durch Flotations-De-inken nicht entfärbt werden und danach noch einen deutlichen Farbstich aufweisen.

Die Flotation wurde unter Verwendung folgender Zusätze durchgeführt:

5

```
1.0 %    Wasserstoffperoxid
0.8 %    NaOH
0.2 %    Komplexbildner (Na_5DTPA)
2.0 %    Wasserglas
0.6 %    Seife
0.1 %    Dispergiermittel (Natriumolinat)
```

Beispiel 5:

Eine Mischung aus unbedrucktem, zu ca. 70 % in der Masse gefärbtem Ausschuß aus der Produktion von Selbstdurchschreibepapieren wird bei einer Stoffdichte von 18 % und einer Temperatur von 45 °C und einem pH-Wert von 9.0 innerhalb von 20 Minuten im Laborkneter mechanisch behandelt.

Diese Vorgehensweise simuliert in verstärkter Form die Verhältnisse im Dickstoffpulper und führt zu einer teilweisen Zerstörung der Farbstoffkapseln, mit denen das Papier beschichtet ist. Die austretenden, zunächst farblosen organischen Verbindungen, reagieren dann zu den Farbstoffen ab.

Anschließend wird bei 5 % Stoffdichte und 60 °C mit Formamidinsulfinsäure (FAS) beziehungsweise Dithionit entfärbt.

Die Ergebnisse sind in den Tabellen 3 und 4 aufgeführt

Tabelle 3

| | $R_{457}$ | Farbort | | | pH Anfang | pH Ende |
|---|---|---|---|---|---|---|
| | | x | y | Y | | |
| Rohmaterial | 53.1 | 0,3213 | 0,3229 | 53,51 | | |
| 50°C im Kneter | 45,1 | 0,3227 | 0,3240 | 46,84 | | |
| 0,5% FAS | 60,8 | 0,3030 | 0,3058 | 51,61 | 9.0 | 7.5 |
| 0,5 % Dithionit | 55,5 | 0,3060 | 0,3083 | 49,63 | 6.0 | 6.3 |
| 70°C im Kneter | 45,0 | 0,3208 | 0,3207 | 45,77 | | |
| 0,5 % FAS | 61,8 | 0,3015 | 0,3039 | 51,77 | 9.0 | 7.4 |
| 0,5 % Dithionit | 57,8 | 0,3213 | 0,3229 | 53,51 | 6.0 | 6.1 |

Tabelle 4:

| | $R_{457}$ | Farbort | | | pH Anfang | pH Ende |
|---|---|---|---|---|---|---|
| | | x | y | Y | | |
| Rohmaterial | 53,1 | 0,3213 | 0,3229 | 53,51 | | |
| 50°C im Kneter | 44,2 | 0,3257 | 0,3263 | 47,60 | | |
| 1 % FAS | 63,1 | 0,3060 | 0,3100 | 55,50 | 9.0 | 7.3 |
| 1 % Dithionit | 57,0 | 0,3087 | 0,3119 | 52,22 | 6.0 | 6.0 |
| 70°C im Kneter | 45,4 | 0,3209 | 0,3212 | 46,88 | | |
| 1 % FAS | 60,8 | 0,3042 | 0,3073 | 51,95 | 9.0 | 7.1 |
| 1 % Dithionit | 53,1 | 0,3213 | 0,3229 | 53,51 | 6.0 | 6.1 |

Beispiel 6:

Eine Mischung aus holzfreiem, unbedrucktem, zu ca. 70 % in der Masse gefärbtem Ausschuß aus der Produktion von Selbstdurchschreibepapieren wird bei einer Stoffdichte von 18 % und einer Temperatur von 70°C im Laborkneter mit FAS (Anfangs-pH-Wert : 9.0, Natronlauge und FAS wurden gleichzeitig eingetragen) beziehungsweise Natriumdithionit (Anfangs-pH-Wert : 6,0) behandelt, anschließend auf 5 % Stoffdichte verdünnt, der pH-Wert erneut auf 9,0 (FAS) beziehungsweise 6,0 (Dithionit) eingestellt und 1 h bei 60°C aufbewahrt.

Die Ergebnisse sind in der Tabelle 5 aufgeführt.

**Tabelle 5:** Entfärbung von unbedrucktem Ausschuß während der Stoffauflösung.

| FAS bzw. Dithionit | 0,5 Gew.-% | | | | 1,0 Gew.-% | | | |
|---|---|---|---|---|---|---|---|---|
| | Farbwerte | | | | Farbwerte | | | |
| | $R_{457}$ | x | y | Y | $R_{457}$ | x | y | Y |
| Rohmaterial | 53.1 | 0,3213 | 0,3229 | 53,51 | 53,1 | 0,3213 | 0,3229 | 53,51 |
| FAS | 59,6 | 0,3008 | 0,3020 | 50,96 | 65,2 | 0,2969 | 0,2979 | 51,87 |
| Dithionit | 47,5 | 0,3144 | 0,3156 | 46,54 | 50,3 | 0,3178 | 0,3197 | 51,61 |

Beispiel 7:

Eine Mischung aus holzfreiem, unbedrucktem, zu ca. 80% in der Masse gefärbtem Ausschuß aus der Produktion von Selbstdurchschreibepapier (NCR-Papier) wird bei einer Stoffdichte von 15 % und 40°C für 15 Min. mit den Deinking-Chemikalien imprägniert. Anschließend läßt man 45 Min bei 5% Stoffdichte und 40°C ausreagieren, zerfasert 10 Min. bei 3% Stoffdichte im Standardaufschlaggerät, wäscht 10 Min. mit 2 l Wasser/Min. und einer Siebmaschenweite von 64μm in der Degussa-Labor-Wasch-Deinking-Zelle. Der gewaschene Stoff wird dann eine Stunde bei 60°C und 5% Stoffdichte mit 0,5% FAS/=,3% NaOH bzw. 1,0% FAS/0,5% NaOH gebleicht.

Deinking-Chemikalien:

a. 0,6% NaOH
0,5% Na-Olinat

b. 0,8% NaOH
0,5% Na-Olinat
0,5% $H_2O_2$
2,0% Wasserglas
0,2% $Na_5DTPA$

Die Ergebnisse sind in Tabelle 6 aufgeführt

**Tabelle 6:** Reduktive Nachbleiche von NCR-Ausschuß nach einem Wasch-Deinking-Schritt

|  | a) ohne $H_2O_2$ $R_{457}$ | Farbwerte | | | b) mit $H_2O_2$ $R_{457}$ | Farbwerte | | |
|---|---|---|---|---|---|---|---|---|
|  |  | x | y | Y |  | x | y | Y |
| Rohmaterial | 40,3 | 0.3358 | 0,3495 | 52,4 | 40,3 | 0,3358 | 0,3495 | 52,4 |
| Wasch-Deinkt | 44,3 | 0,3513 | 0,3652 | 66,7 | 45,6 | 0,3508 | 0,3642 | 68,7 |
| Nachbleiche mit 0,5% FAS | 71,9 | 0,3180 | 0,3272 | 77,5 | 73,8 | 0,3173 | 0,3266 | 78,8 |
| mit 1,0% FAS | 75,2 | 0,3139 | 0,3214 | 77,8 | 78,1 | 0,3143 | 0,3222 | 80,0 |

Beispiel 8:

Eine Probe von NCR-Ausschuß wie in Beispiel 7 wird ebenso wie in Beispiel 7a und 7b mit Deinking-Chemikalien behandelt, danach 10 Min. bei 1% Stoffdichte in der Degussa-Labor-Flotations-Zelle flotiert und anschließend bei 1% Stoffdichte 10 Min. mit 2 l Wasser/Min bei einer Siebmaschenweite von 64 μm in der Degussa-Labor-Wasch-Deinking-Zelle gewaschen. Der so erhaltene Stoff wird wie in Beispiel 7 mit FAS reduktiv nachgebleicht. Die Ergebnisse sind in Tabelle 7 aufgeführt.

**Tabelle 7:** Reduktive Nachbleiche von NCR-Ausschuß nach einem Flotations- und einem Wasch-Deinking-Schritt

|  | a) ohne $H_2O_2$ $R_{457}$ | Farbwerte | | | b) mit 0,5% $H_2O_2$ $R_{457}$ | Farbwerte | | |
|---|---|---|---|---|---|---|---|---|
|  |  | x | y | Y |  | x | y | Y |
| Rohmaterial | 40,0 | 0,3355 | 0,3486 | 49,8 | 40,0 | 0,3355 | 0,3486 | 49,8 |
| Flotations-Deinkt | 40,6 | 0,3371 | 0,3481 | 56,6 | 43,4 | 0,3421 | 0,3540 | 56,7 |
| Wasch-Deinkt | 44,1 | 0,3489 | 0,3598 | 67,7 | 45,2 | 0,3536 | 0,3642 | 69,0 |
| Nachbleiche mit 0,5% FAS | 72,8 | 0,3180 | 0,3263 | 77,4 | 75,2 | 0,3180 | 0,3275 | 81,0 |
| mit 1,0% FAS | 74,2 | 0,3182 | 0,3253 | 78,8 | 77,8 | 0,3156 | 0,3239 | 81,9 |

**Ansprüche**

1. Verfahren zum Entfärben von in der Masse gefärbten Papieren und Selbstdurchschreibepapieren in alkalischem, wässrigem Medium, dadurch gekennzeichnet, daß man bei einer Stoffdichte von 2 bis 20 % und einer Temperatur von 20 bis 80°C mit 0,05 bis 2,5 Gew.-% Formamidinsulfinsäure bezogen auf die Menge des Papiers, entfärbt.

2. Verfahren gemäß Anspruch 1, dadurch gekennzeichnet, daß man die Formamidinsulfinsäure nach der Stoffauflösung zusetzt und anschließend ausreagieren läßt.

3. Verfahren gemäß Anspruch 1, dadurch gekennzeichnet, daß man die Formamidinsulfinsäure zu Beginn oder während der Stoffauflösung zusetzt.

4. Verfahren gemäß den Ansprüchen 1 bis 3, dadurch gekennzeichnet, daß man die Stoffauflösung bei einer Temperatur von 20 bis 80°C durchführt.

5. Verfahren gemäß Anspruch 1, dadurch gekennzeichnet, daß man zwischen Stoffauflösung und Entfärbung einen bekannten Druckfarbenseparations-Prozess, eine Flotation oder eine Wäsche, schaltet.

6. Verfahren gemäß Anspruch 1, dadurch gekennzeichnet, daß man zwischen Stoffauflösung und Entfärbung eine Folge von Flotation und Wäsche bzw. Wäsche und Flotation oder eine Kombination von Wasch- und Flotationsverfahren schaltet.

## Claims

1. A process for decolourising body coloured papers and self copying papers in an alkaline, aqueous medium, characterised in that decolourisiation is carried out with 0.05 to 2.5% by weight of formamidine sulphinic acid, based on the quantity of the paper, at a pulp density of from 2 to 20% and a temperature of 20 to 80°C.

2. A process according to Claim 1, characterised in that the formamidine sulphinic acid is added after the pulp has been dissolved and is then left to react.

3. A process according to Claim 1, characterised in that the formamidine sulphinic acid is added at the onset of or during dissolving of the pulp.

4. A process according to Claims 1 to 3, characterised in that dissolving of the pulp is carried out at a temperature from 20 to 80°C.

5. A process according to Claim 1, characterised in that a known process of printing ink separation, flotation or washing is interposed between dissolving of the pulp and decolourisation.

6. A process according to Claim 1, characterised in that a sequence of flotation and washing or washing and flotation or a combination of washing and flotation is interposed between dissolving of the pulp and decolourisation.

## Revendications

1. Procédé de décoloration de papiers colo-rés dans la masse et de papiers autocopiants dans un milieu aqueux alcalin, caractérisé en ce qu'on décolore à une densité de pâte à papier de 2 à 20 % et une température de 20 à 80 °C avec 0,05 à 2,5 % pds d'acide formamidinesulfinique (FAS) par rapport à la quantité de papier.

2. Procédé selon la revendication 1, caractérisé en ce qu'on ajoute de l'acide formamidinesulfi-nique après le délitage de la pâte et qu'ensuite on laisse réagir.

3. Procédé selon la revendication 1, caractérisé en ce qu'on ajoute l'acide formamidinesulfinique au début ou pendant le délitage de la pâte.

4. Procédé selon les revendications 1 à 3, caractérisé en ce qu'on réalise le délitage de la pâte à une température comprise entre 20 et 80°C.

5. Procédé selon la revendication 1, caractérisé en ce qu'entre le délitage de la pâte et la décoloration de la pâte et la décoloration on intercale un procédé connu de séparation de l'encre, une flot-tation ou un lessivage.

6. Procédé selon la revendication 1, caractérisé en ce qu'entre le délitage de la pâte et la décoloration on intercale une succession de flottation et lessivage ou lessivage et flottation, ou une combi-naison de procédés de lavage et de flottation.

## ABHÄNGIGKEIT DES WEISSGEHALTES VOM REDUKTIONSMITTEL-EINSATZ